# FASCICULE DE BREVET EUROPEEN

(11) **EP 3 705 364 B1**
(45) Date de publication et mention de la délivrance du brevet: **24.03.2021**
(21) Numéro de dépôt: 20159950.3
(22) Date de dépôt: 28.02.2020
(51) Int. Cl.: B60S 9/12

(54) **STABILISATEUR DE VÉHICULE**
STABILISATOR EINES FAHRZEUGS
VEHICLE STABILISER

(30) Priorité: 08.03.2019 FR 1902381
(43) Date de publication de la demande: 09.09.2020
(73) Titulaire: Cal4uze, 38170 Seyssinet-Pariset (FR)
(72) Inventeur: FARINA, Laurent, 38170 SEYSSINET-PARISET (FR)
(74) Mandataire: Cabinet Beaumont

(56) Documents cités:
- US-A- 3 214 137
- US-A- 5 419 524
- US-A- 5 676 385

## Description

### Domaine technique

La présente description concerne de façon générale les véhicules automobiles et, plus particulièrement, les autocaravanes ou camping-cars.

### Technique antérieure

Des systèmes comportant des béquilles actionnées manuellement ou par l'intermédiaire de moteurs électriques sont généralement utilisés pour stabiliser des véhicules. Des systèmes à vérin existent également mais ces systèmes sont onéreux, complexes et peu commodes d'utilisation.

Le document US 5,676,385 décrit un système de mise à niveau semi-automatique pour véhicule.

Le document US 5,527,054 décrit un mécanisme d'ajustement en longueur d'un pied de mise à niveau ou de levage d'une remorque.

Le document US 4,165,861 décrit un système de mise à niveau pour véhicule.

Le document US2018/0022325 décrit la mise à niveau à trois points pour véhicule avec des systèmes de stabilisation multipoints.

### Résumé de l'invention

Il existe un besoin d'améliorer les systèmes existants.

Un mode de réalisation pallie tout ou partie des inconvénients des systèmes connus.

L'invention prévoit un dispositif stabilisateur de véhicule, comportant une unité électrohydraulique comprenant :
un vérin simple effet ;
au moins un ressort de rappel vers une position rétractée du vérin ; et
une semelle adaptée à établir un contact entre une extrémité du vérin et une surface d'appui, cette semelle comportant :
   une structure creuse à nervures radiales, composée d'un mélange de matériaux polymères et de fibres de verre ; et
   un palet amortisseur en matériau souple, de préférence en caoutchouc.

Selon un mode de réalisation, le dispositif comporte en outre au moins une pièce intercalaire de fixation de l'unité électrohydraulique à un élément de structure d'un véhicule.

Selon un mode de réalisation, la ou les pièces intercalaires sont conformées en fonction du modèle de véhicule destiné à recevoir les unités électrohydrauliques.

Selon un mode de réalisation, chaque vérin comporte un pied de réglage préalable à une manœuvre du vérin, adapté à augmenter une course du vérin, de préférence sur une plage de 50 mm, ce pied demeurant ensuite fixe pendant la manœuvre du vérin.

Selon un mode de réalisation, chaque unité électrohydraulique comprend :
un réservoir souple, contenant un liquide hydraulique d'actionnement du vérin ; et
une motopompe électrique adaptée à mettre sous pression le liquide hydraulique contenu dans le réservoir souple.

Selon un mode de réalisation, des parties mobiles, des éléments de réglage et des compartiments hydrauliques, associés aux unités électrohydrauliques, sont enduits d'une substance anticorrosion.

Un mode de réalisation prévoit un système stabilisateur de véhicule, comportant quatre dispositifs tels que décrits.

Selon un mode de réalisation, les unités électrohydrauliques sont adaptées à effectuer une modification d'assiette d'un véhicule, à l'arrêt, par rapport à une surface d'appui.

Selon un mode de réalisation, un circuit électronique est adapté à piloter individuellement chaque unité électrohydraulique.

Selon un mode de réalisation, le circuit électronique comporte des éléments de protection face à des perturbations électromagnétiques externes.

Selon un mode de réalisation, le circuit électronique comporte un dispositif gyroscopique adapté à régler automatiquement l'assiette du véhicule par rapport à une surface d'appui présentant une pente n'excédant pas 10 %, de préférence 6 %.

Un mode de réalisation prévoit un système comportant une interface homme-machine reliée au circuit électronique par l'intermédiaire d'une liaison filaire.

Un mode de réalisation prévoit un système comportant une interface homme-machine reliée au circuit électronique par l'intermédiaire d'une liaison sans fil.

Un mode de réalisation prévoit un système comportant une interface homme-machine connectable directement :
à une seule des unités électrohydrauliques par l'intermédiaire d'un connecteur ; et
à une source d'alimentation externe, cette interface homme-machine étant adaptée à piloter l'unité électrohydraulique concernée indépendamment de l'état du circuit électronique.

Un mode de réalisation prévoit un système adapté à soulever un véhicule d'un poids n'excédant pas 3,5 t.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon schématique, un véhicule équipé d'un mode de réalisation d'un système stabilisateur de véhicule ;
la figure 2 est une vue en perspective d'un mode de réalisation d'un dispositif stabilisateur de véhicule ;
la figure 3 est une vue, partiellement en coupe, d'un mode de réalisation d'un dispositif stabilisateur de véhicule ;
la figure 4 représente schématiquement et partiellement un mode de réalisation d'un corps d'une unité électrohydraulique d'un dispositif stabilisateur de véhicule ;
la figure 5 représente schématiquement et partiellement, par des vues (A) et (B), des modes de réalisation d'une unité électrohydraulique d'un dispositif stabilisateur de véhicule en position déployée ;
la figure 6 représente schématiquement et partiellement, par des vues (A) et (B), des modes de réalisation d'une unité électrohydraulique d'un dispositif stabilisateur de véhicule en position rétractée ;
la figure 7 représente un autre mode de réalisation d'un dispositif stabilisateur de véhicule ;
la figure 8 est une vue de dessus d'un mode de réalisation d'une semelle d'une unité électrohydraulique ;
la figure 9 représente, par des vues (A), (B), (C) et (D), des modes de réalisation de pièces de montage d'unités électrohydrauliques ;
la figure 10 représente schématiquement un mode de réalisation d'une unité de commande d'un système stabilisateur de véhicule ;
la figure 11 représente schématiquement un mode de réalisation d'une interface homme-machine adaptée à la commande d'un système stabilisateur de véhicule ; et
la figure 12 représente un mode de réalisation d'un diagramme d'états d'un système stabilisateur de véhicule.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures ou à un véhicule dans une position normale d'utilisation.

Sauf précision contraire, les expressions "environ", "approximativement", "sensiblement", et "de l'ordre de" signifient à 10 % près, de préférence à 5 % près.

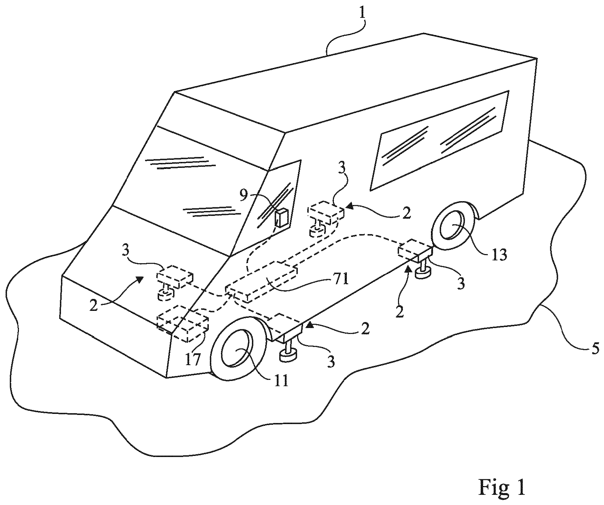

La figure 1 représente, de façon schématique, un véhicule équipé d'un mode de réalisation d'un système stabilisateur de véhicule.

Selon ce mode de réalisation, un véhicule 1 (de préférence, une autocaravane ou camping-car) est équipé d'un système stabilisateur de véhicule comportant quatre dispositifs stabilisateurs 2 comprenant chacun une unité électrohydraulique 3. Ainsi, quatre unités électrohydrauliques sont disposées sous le véhicule 1. Les unités sont, de préférence, réparties par paires :
une paire est située à proximité d'un essieu 11 avant ; et
une autre paire est située à proximité d'un essieu 13 arrière.

Lors d'une opération de stabilisation du véhicule 1, les unités électrohydrauliques 3 modifient une assiette du véhicule à l'arrêt par rapport à une surface 5 d'appui (typiquement, un sol) située sous ce véhicule.

Chaque unité électrohydraulique 3 est installée à un emplacement variable en fonction du véhicule. Cet emplacement est généralement déterminé en vue de constituer un agencement global :
soumettant toutes les unités à des contraintes mécaniques sensiblement équivalentes ; et/ou
écartant tout risque de basculement du véhicule 1 lors de l'opération de stabilisation.

Selon un mode de réalisation, les emplacements des quatre unités électrohydrauliques 3 sont définis de sorte que :
un barycentre des emplacements des unités avoisine, de préférence coïncide avec, une position d'un centre de gravité du véhicule 1 ; et/ou
chaque unité soit la plus éloignée possible des trois autres unités.

Les quatre unités électrohydrauliques 3 sont reliées, de préférence connectées, à une unité de commande 71. L'unité de commande 71 pilote des mouvements respectifs des unités électrohydrauliques 3 lors d'une opération de stabilisation du véhicule 1. Une interface homme-machine 9 ou télécommande est en outre reliée, de préférence connectée, à l'unité de commande 71. La télécommande 9 est adaptée à contrôler le système stabilisateur de véhicule. La télécommande 9 est implantée de préférence à proximité d'un poste de conduite du véhicule 1. L'unité de commande 71 est raccordée à une source 17 d'alimentation électrique, de préférence une batterie embarquée sur le véhicule 1.

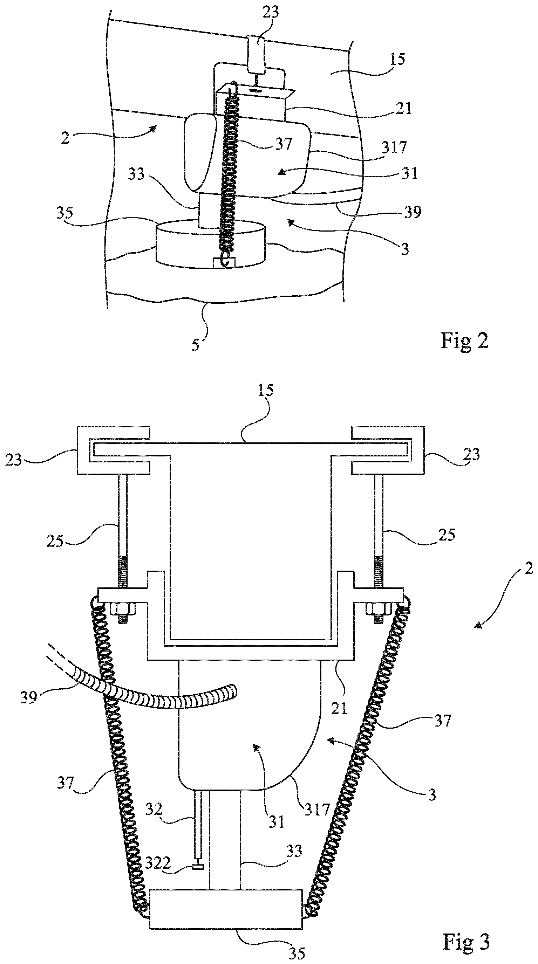

La figure 2 est une vue en perspective d'un mode de réalisation d'un dispositif stabilisateur de véhicule.

Selon ce mode de réalisation, un corps 31 de l'unité électrohydraulique 3 du dispositif stabilisateur 2 est fixé à au moins un élément 15 de structure d'un véhicule. Cet élément de structure 15 est typiquement une poutre, un longeron, une traverse ou, de manière générale, une pièce appartenant à un châssis de véhicule. Une pièce 21 de montage, pièce d'adaptation ou pièce intercalaire, est intercalée entre le corps 31 de l'unité électrohydraulique 3 et l'élément de structure 15 du véhicule. La pièce de montage 21 est maintenue solidaire :
en sa partie inférieure, du corps 31 de l'unité électrohydraulique 3 ; et
en sa partie supérieure, de l'élément de structure 15 du véhicule.

La pièce de montage 21 est dimensionnée en fonction d'un effort de poussée souhaité, développé par l'unité électrohydraulique 3, durant une opération de stabilisation.

Selon un mode de réalisation préféré, un assemblage 23 mécanique démontable (par exemple, constitué par des agrafes et des crapauds) lie la pièce de montage 21 au véhicule 1. L'unité électrohydraulique 3 est ainsi aisément déposable à des fins de maintenance et/ou de réparation et/ou de migration vers un autre véhicule de tout ou partie d'un système de stabilisation.

L'unité électrohydraulique 3 comprend un vérin 33 simple effet. Une extrémité inférieure de ce vérin 33 comporte une semelle 35 de forme cylindrique. La semelle 35 est adaptée à établir un appui plan avec une surface 5 en vis-à-vis. La semelle 35 est reliée à la pièce de montage par au moins un ressort 37 de rappel, de préférence par deux ressorts de rappel. Ce ou ces ressorts de rappel 37 sont adaptés à ramener le vérin 33 dans une position rétractée.

Le mode de réalisation présenté en figure 2 comporte plusieurs avantages :
une simplicité de conception et de mise en œuvre due à un emploi d'un vérin simple effet au lieu d'un vérin double effet ; et
une disponibilité accrue du système grâce à une utilisation de ressorts de rappel aisément remplaçables.

Un câble multiconducteur achemine des signaux électriques destinés à alimenter l'unité électrohydraulique 3. Ce câble est de préférence protégé par un fourreau 39, typiquement un tube annelé souple ou une goulotte. Le fourreau 39 constitue une barrière de protection du câble contre d'éventuelles agressions extérieures (par exemple, des projections d'eau ou des chocs). Un connecteur étanche (non représenté) raccorde le câble multiconducteur au corps 31 de l'unité électrohydraulique 3 protégée par un carter 317.

Le vérin simple effet 33 de l'unité électrohydraulique 3 est dimensionné en fonction :
des efforts requis pour soulever un véhicule d'un poids n'excédant de préférence pas 3,5 t ; et
d'une force de traction exercée sur la semelle 35 par le ou les ressorts de rappel 37.

Selon un mode de réalisation préféré, le vérin 33 est irréversible par construction. En d'autres termes, aucune source d'alimentation électrique n'est requise pour maintenir une position prise par le vérin 33 à l'issue de l'opération de stabilisation.

La figure 3 est une vue, partiellement en coupe, d'un mode de réalisation d'un dispositif stabilisateur de véhicule.

Selon ce mode de réalisation, l'unité électrohydraulique 3 comporte un capteur 32 de fin de course (typiquement, un interrupteur de position). Le capteur 32 est constitué d'un tube métallique monté parallèlement au corps du vérin. Le tube comporte à une extrémité inférieure, proche de la semelle 35, un élément mobile de type poussoir 322. Le capteur 32 est disposé ou réglé en hauteur de sorte que, lorsque le vérin 33 est ramené en position rétractée, la semelle 35 vienne actionner le poussoir 322. Le poussoir 322 est mécaniquement lié à un interrupteur électrique (typiquement, un contact libre de potentiel). Chaque actionnement ou libération du poussoir 322 provoque ainsi une commutation de l'interrupteur.

Selon un mode de réalisation préféré, l'interrupteur est un contact sec normalement ouvert. Ce contact est :
ouvert, tant que le vérin 33 est en position partiellement ou totalement déployée ; ou
fermé, uniquement lorsque le vérin 33 est en position rétractée.

On considère qu'il est dangereux pour un véhicule de circuler si ses vérins ne sont pas tous en position rétractée. L'utilisation d'un contact normalement ouvert permet de se placer dans un fonctionnement dit à « sécurité positive », c'est-à-dire d'interpréter de la même façon :
une coupure de fil du capteur 32 ; et
une détection de la position partiellement ou totalement déployée du vérin 33.

La sécurité du système est ainsi renforcée par rapport à une configuration où une coupure de fil du capteur 32 risquerait d'être confondue avec une détection de la position rétractée du vérin 33 (par exemple, en utilisant un contact normalement fermé).

Selon le mode de réalisation de la figure 3, l'unité électrohydraulique 3 comporte deux ressorts 37 de rappel. Lors d'un repli du vérin 33 depuis une position totalement ou partiellement déployée vers la position rétractée, ces ressorts 37 exercent un effort de traction sur la semelle 35. Les deux ressorts de rappel 37 sont attachés de part et d'autre de la pièce 21 intercalaire du dispositif 2 comportant l'unité 3.

Selon le mode de réalisation de la figure 3, la pièce intercalaire 21 est maintenue solidaire de l'élément de structure 15 du véhicule par l'intermédiaire de deux agrafes 23. Ces agrafes 23 comportent chacune des tiges 25 filetées sur lesquelles est boulonnée la pièce intercalaire 21.

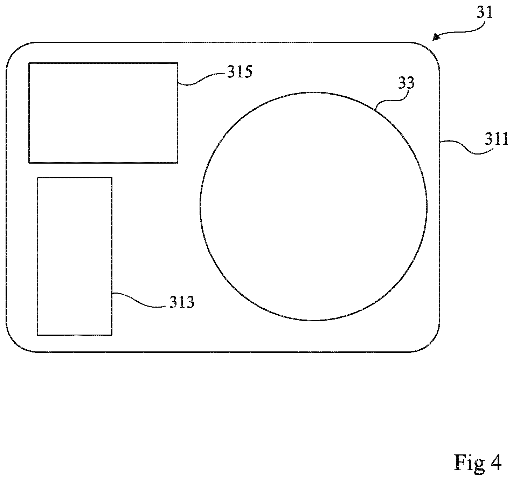

La figure 4 représente schématiquement et partiellement un mode de réalisation d'un corps d'une unité électrohydraulique d'un dispositif stabilisateur de véhicule.

Le corps 31 de l'unité électrohydraulique 3 comporte une platine supérieure 311 sur laquelle sont fixés :
le vérin 33 simple effet ;
un moteur électrique 313, par exemple un moteur à courant continu ; et
un réservoir 315 souple, ou poche hydraulique, contenant un liquide hydraulique d'actionnement du vérin 33 (par exemple, un bain de graisse silicone).

Le moteur électrique 313 est associé à un corps de pompe (non représenté), l'ensemble formant ainsi une motopompe. Cette motopompe est adaptée à mettre sous pression le liquide hydraulique, contenu dans la poche hydraulique 315, d'actionnement du vérin 33.

Selon un mode de réalisation préféré, les éléments 33, 313, 315 sont protégés contre d'éventuelles agressions extérieures (projections d'eau, poussières, chocs, etc.) par le carter 317 de protection. Selon ce mode de réalisation préféré, des parties mobiles du vérin simple effet 33 ainsi qu'une surface externe de la poche hydraulique 315 sont enduites d'une substance anticorrosion (typiquement, de la graisse).

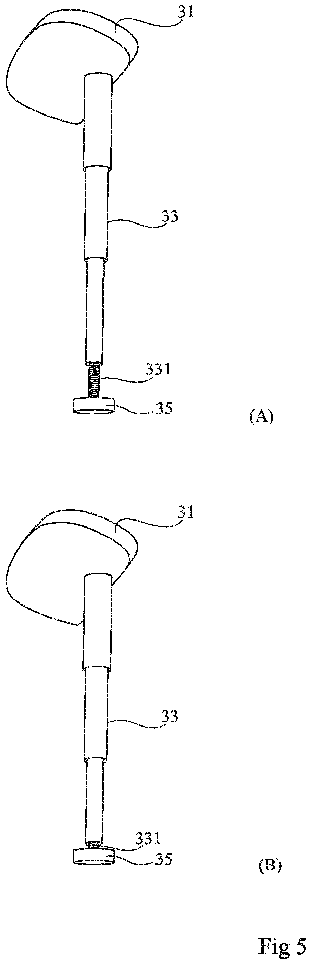

La figure 5 représente schématiquement et partiellement, par des vues (A) et (B), des modes de réalisation d'une unité électrohydraulique d'un dispositif stabilisateur de véhicule en position déployée.

Selon ce mode de réalisation, un vérin 33 simple effet est solidaire d'un corps 31 de l'unité électrohydraulique 3. Ce vérin 33 est notamment constitué de plusieurs cylindres concentriques. Des déplacements relatifs de ces cylindres le long d'un même axe entraînent une modification de longueur totale du vérin 33. En une extrémité inférieure, le vérin 33 comporte un pied 331 sur lequel est fixée une semelle 35. Une partie du pied est de préférence filetée. Ainsi, le pied 331 permet de régler, en vissant ou en dévissant, une distance entre l'extrémité inférieure du dernier cylindre du vérin 33 et la semelle 35. Une possibilité de préréglage, de préférence sur une plage de 50 mm, est ainsi offerte avant une opération de stabilisation d'un véhicule. En d'autres termes, le pied 331 fait office de rallonge réglable préalablement à l'opération de stabilisation.

Selon un mode d'utilisation, la hauteur du pied 331 est réglée une fois pour toutes pour un véhicule donné.

Selon un autre mode d'utilisation, la hauteur du pied 331 est réglée à chaque utilisation. Plusieurs avantages en résultent, notamment des possibilités de compenser :
une déclivité particulièrement importante d'un sol sous le véhicule ; et/ou
un accident de terrain (par exemple, un trou ou une bosse).

La vue (A) de la figure 5 représente le pied 331 dans une position dévissée tandis que la vue (B) représente le pied 331 dans une position vissée. Une fonctionnalité associée à ce pied consiste à modifier la longueur de la tige du vérin avant déploiement.

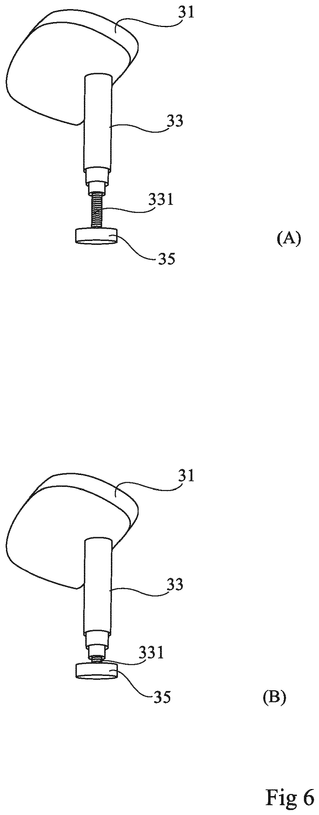

La figure 6 représente schématiquement et partiellement, par des vues (A) et (B), des modes de réalisation d'une unité électrohydraulique d'un dispositif stabilisateur de véhicule en position rétractée.

La vue (A) représente le pied 331 dans une position dévissée tandis que la vue (B) représente le pied 331 dans une position vissée.

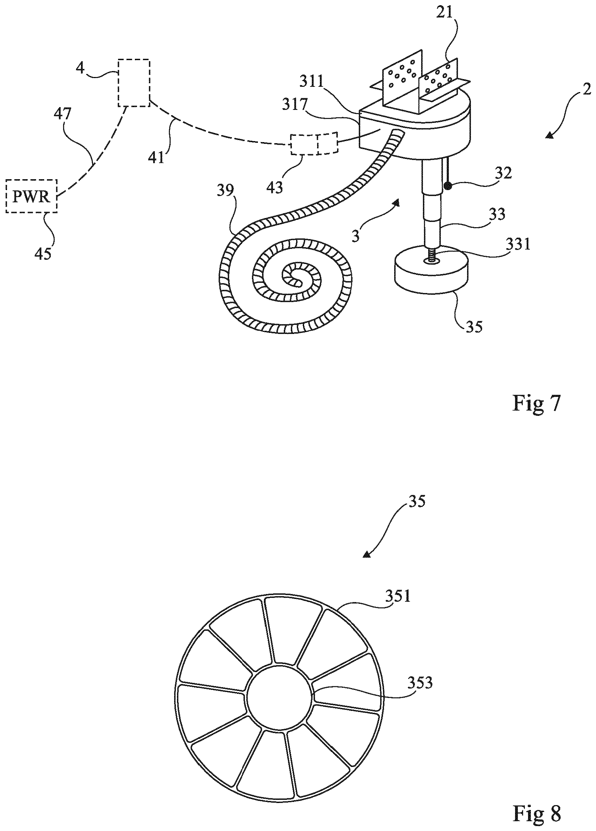

La figure 7 représente un autre mode de réalisation d'un dispositif stabilisateur de véhicule.

Selon ce mode de réalisation, le vérin simple effet 33 de l'unité électrohydraulique 3 est disposé de telle sorte que le vérin simple effet soit perpendiculaire à la platine supérieure 311. Sur cette platine 311 est fixée la pièce 21 d'adaptation au châssis de véhicule. Le carter 317 de protection enveloppe les éléments associés au vérin 33 (par exemple, la motopompe 313 mettant sous pression un liquide d'actionnement du vérin 33 contenu dans le réservoir 315). L'interrupteur 32 de fin de course est placé en regard de la semelle 35. La semelle 35 est solidarisée au vérin par l'intermédiaire du pied 331 (par exemple, une tige filetée comportant une tête cylindrique imbriquée dans la semelle).

Un faisceau électrique contenu dans la gaine ou fourreau 39 est relié à l'unité électrohydraulique 3. Selon un mode de réalisation, le faisceau électrique est constitué d'un câble multiconducteur à quatre fils :
deux fils acheminent un signal d'alimentation de l'unité électrohydraulique 3 ; et
deux autres fils transmettent un signal d'information de position déployée ou rétractée du vérin 33.

Selon un mode de réalisation préféré, une interface 4 homme-machine ou boîte à boutons est connectable directement :
à une seule unité électrohydraulique 3 à la fois par l'intermédiaire d'un câble 41 muni d'un connecteur 43 ; et
à une source d'alimentation externe 45 (PWR) par l'intermédiaire d'un câble 47.

Selon un mode de réalisation, la source d'alimentation externe 45 est une batterie embarquée sur le véhicule 1.

L'interface homme-machine 4 facilite des opérations de maintenance et de dépannage en offrant une possibilité de pilotage de l'unité électrohydraulique 3 indépendamment de l'unité de commande 71.

La figure 8 est une vue de dessus d'un mode de réalisation d'une semelle d'une unité électrohydraulique.

Selon ce mode de réalisation, la semelle 35 est constituée d'une structure 351 monobloc et d'un palet 353 ou patin amortisseur. La structure, d'une forme cylindrique creuse, comporte des nervures radiales. Ces nervures radiales contribuent à rigidifier la structure de la semelle 35. Elles permettent ainsi d'éviter toute déformation plastique (irréversible) ou rupture de la structure au cours d'une opération de stabilisation.

Selon un mode de réalisation préféré, deux unités électrohydrauliques 3 installées à l'avant d'un véhicule 1 comportent des semelles 35 constituées d'un mélange de matériaux polymères renforcés par des fibres de verre. Cela améliore la solidité des semelles 35 qui supportent le poids le plus important du véhicule 1 (côté moteur). Le palet amortisseur 353 est quant à lui constitué d'une matière souple (par exemple, du caoutchouc). Ce palet est adapté à absorber des vibrations ou des chocs susceptibles de se propager entre une unité électrohydraulique 3 et une surface d'appui 5. Le palet amortisseur 353 contribue également à limiter des sollicitations mécaniques transitoires s'exerçant au niveau de l'unité électrohydraulique 3. Cette limitation des sollicitations mécaniques vise à augmenter une durée de vie du système et à améliorer un confort ressenti par des occupants du véhicule 1.

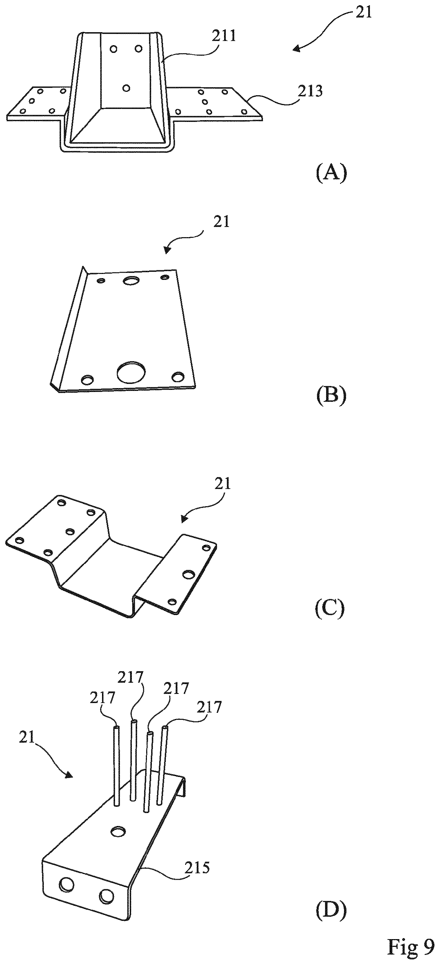

La figure 9 représente, par des vues (A), (B), (C) et (D), des modes de réalisation de pièces de montage d'unités électrohydrauliques.

Selon les modes de réalisation de la figure 9, une pièce 21 d'interface, ou pièce intercalaire, est conformée à un type de véhicule. Cette pièce intercalaire 21 intervient dans un assemblage mécanique, de préférence démontable, adapté à fixer une unité électrohydraulique 3 sur un élément 15 de structure d'un véhicule.

Selon le mode de réalisation de la vue (A), la pièce intercalaire 21 comporte une première pièce 211 fixée (par exemple, rapportée soudée) à une deuxième pièce 213. La première pièce 211 présente une forme d'équerre conformée en fonction d'un châssis de véhicule spécifique. La deuxième pièce 213 est constituée d'une tôle présentant un profil en forme d'oméga inversé. Cette deuxième pièce est adaptée à recevoir une unité électrohydraulique 3. La deuxième pièce 213 est typiquement obtenue par pliage.

Selon le mode de réalisation de la vue (B), la pièce intercalaire 21 est constituée d'une tôle présentant un profil en forme de « L ». Cette pièce est typiquement obtenue par pliage.

Selon le mode de réalisation de la vue (C), la pièce intercalaire 21 est constituée d'une tôle présentant un profil en forme d'oméga inversé. Cette pièce est typiquement obtenue par pliage.

Selon le mode de réalisation de la vue (D), la pièce intercalaire 21 est constituée d'une tôle 215 présentant un profil en forme de « U ». La tôle 215 comporte quatre trous taraudés, accueillant chacun une tige 217 filetée. Le profil de la tôle 215 est typiquement obtenu par pliage.

Selon les modes de réalisation de la figure 9, les pièces intercalaires 21 comportent des perçages et/ou des alésages et/ou des taraudages. Ces usinages confèrent à la pièce d'interface 21 des caractéristiques structurelles adaptées à établir une liaison entre l'unité électrohydraulique 3 et l'élément de châssis 15 du véhicule.

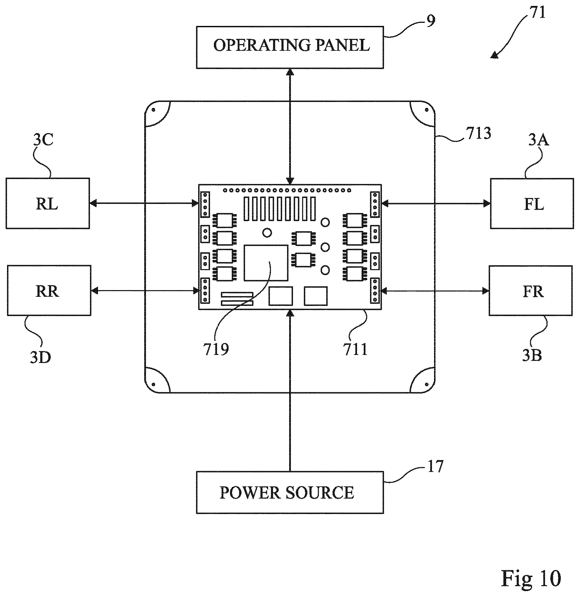

La figure 10 représente schématiquement un mode de réalisation d'une unité de commande d'un système stabilisateur de véhicule.

Une unité 71 de commande comporte un circuit 711 électronique placé à l'intérieur d'un boîtier 713. Le boîtier 713 protège le circuit 711 contre d'éventuelles agressions extérieures (projections d'eau, poussières, chocs, etc.). Le circuit 711 est relié, de préférence connecté, à une source 17 (POWER SOURCE) d'alimentation électrique. Selon un mode de réalisation préféré, le circuit 711 est alimenté sous une tension d'environ 12 volts par branchement sur deux bornes d'une batterie embarquée sur un véhicule. Selon un autre mode de réalisation, le circuit 711 est alimenté sous une tension d'environ 12 volts obtenue en sortie d'un convertisseur de puissance (par exemple, une alimentation à découpage raccordée en entrée à une source alternative monophasée 230 volts, 50 Hz).

Selon un mode de réalisation préféré, le circuit 711 comporte un dispositif gyroscopique 719 adapté à régler automatiquement une assiette d'un véhicule par rapport à une surface d'appui. La surface d'appui présente une pente n'excédant pas 10 %, de préférence 6 %.

Selon un mode de réalisation préféré, le circuit 711 comporte en outre des éléments de protection face à des perturbations électromagnétiques externes.

Le circuit électronique 711 est relié, de préférence connecté, à quatre unités 3A (FL), 3B (FR), 3C (RL), 3D (RR) électrohydrauliques respectivement implantées :
à l'avant gauche du véhicule ;
à l'avant droit du véhicule ;
à l'arrière gauche du véhicule ; et
à l'arrière droit du véhicule.
Chaque unité 3 reçoit, du circuit 711, un signal d'alimentation en courant continu. En outre, chaque unité 3 émet vers le circuit 711 un signal représentatif d'un état d'un capteur de fin de course. Selon un mode de réalisation préféré, le capteur est un interrupteur de position détectant un état rétracté de l'unité électrohydraulique 3.

Selon un mode de réalisation, une télécommande 9 (OPERATING PANEL) est reliée, de préférence connectée, au circuit 711. La télécommande 9 est adaptée à dialoguer avec le circuit 711 pour :
émettre des ordres ou des commandes vers le circuit 711 afin de piloter un système stabilisateur ; et
afficher des informations relatives à des états du système stabilisateur.

Selon un autre mode de réalisation, la télécommande 9 dialogue avec le circuit 711 par l'intermédiaire d'une connexion sans fil.

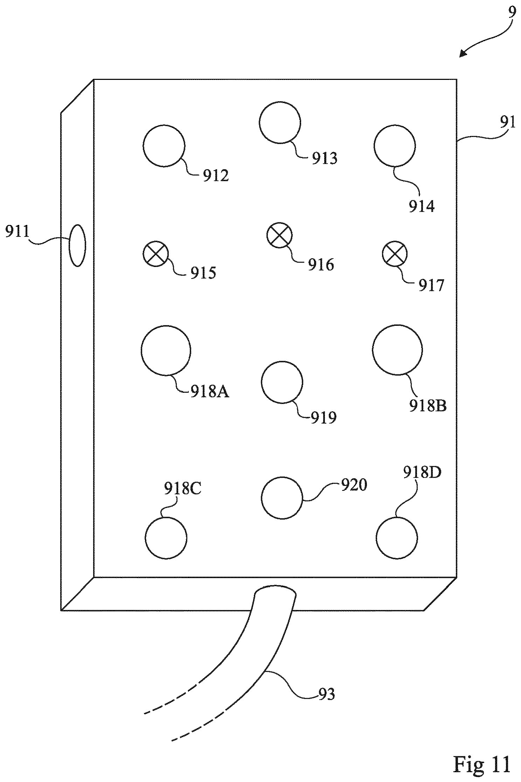

La figure 11 représente schématiquement un mode de réalisation d'une interface homme-machine adaptée à la commande d'un système stabilisateur de véhicule.

Selon ce mode de réalisation, une interface 9 homme-machine conventionnelle (par exemple, une boîte à boutons), ou télécommande, est adaptée à commander le système stabilisateur de véhicule. Cette télécommande 9 comprend un boîtier 91 perforé accueillant des actionneurs et des voyants.

Selon le mode de réalisation représenté en figure 11, le boîtier 91 comporte :
un commutateur 911 à deux positions de mise en/hors tension de l'unité de commande 71 raccordée à la télécommande 9 ;
un bouton-poussoir 912 adapté à effectuer un réglage, ou une calibration, de l'assiette du véhicule 1, de préférence par rapport à un sol 5 de déclivité nulle ;
un bouton-poussoir 913 adapté à stopper des mouvements en cours sur un ou plusieurs vérins 33 ;
un bouton-poussoir 914 adapté à ouvrir un circuit d'alimentation de puissance des vérins 33 ;
un voyant 915 adapté à signaler que le circuit 711 est sous tension ;
un voyant 916 adapté à signaler, par un éclairage fixe, que l'un au moins des vérins 33 est partiellement ou complètement déployé et, par un éclairage clignotant, que des opérations de réglage interne sont en cours ;
un voyant 917 adapté à signaler que tous les vérins 33 du système sont rétractés ;
quatre commutateurs 918A, 918B, 918C, 918D à trois positions (montée, arrêt et descente), adaptés respectivement à commander indépendamment un repli du vérin, un arrêt du mouvement ou un déploiement du vérin 33 associé ;
un bouton-poussoir 919 adapté à commander une opération de stabilisation du véhicule, cette opération étant effectuée de manière autonome par le système ; et
un bouton-poussoir 920 adapté à replier simultanément tous les vérins 33 du système stabilisateur vers une position rétractée.

En variante, la télécommande 9 ne comporte qu'une partie des éléments ci-dessus.

La télécommande 9 est reliée, de préférence connectée, au circuit électronique d'une unité de commande par l'intermédiaire d'un câble 93 multiconducteur. Le câble 93 achemine des signaux de commande depuis les boutons-poussoirs et les commutateurs de la télécommande 9 vers le circuit électronique (non représenté en figure 11). Le câble 93 achemine en outre des signaux de signalisation depuis le circuit électronique vers la télécommande.

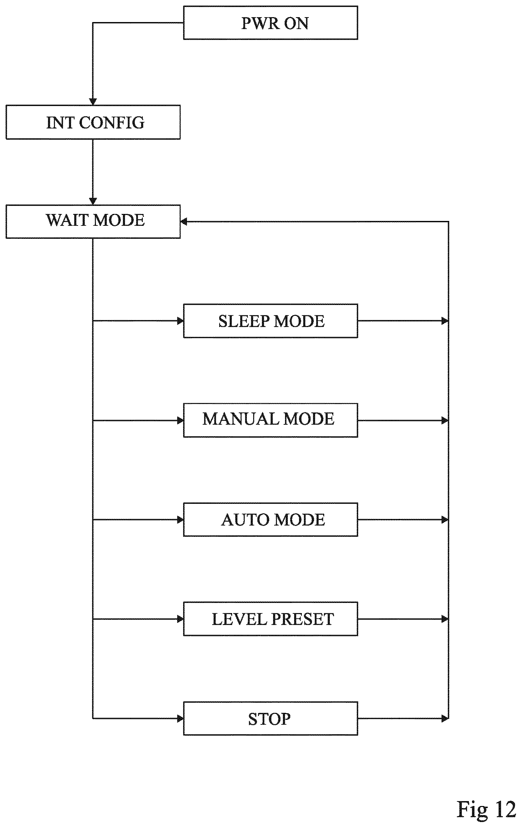

La figure 12 représente un mode de réalisation d'un diagramme d'états d'un système stabilisateur de véhicule.

Selon ce mode de réalisation, un appui sur le commutateur 911 (figure 11) provoque une mise sous tension (PWR ON) du circuit électronique 711 (figure 10). Le circuit 711 entre alors dans une phase de réglage interne (INT CONFIG). Par exemple, le voyant 916 (figure 11) clignote à l'issue de cette phase de réglage interne. Le circuit 711 passe alors dans un mode d'attente (WAIT MODE). Dans ce mode d'attente, le circuit 711 met, le cas échéant, à jour des informations internes (par exemple, des états des capteurs) en attendant une commande d'un utilisateur.

Alors que le circuit 711 est dans le mode d'attente :
une absence de commande entraîne, de préférence au bout de quelques secondes, un passage du circuit 711 en mode veille (SLEEP MODE) ;
un appui sur l'un des commutateurs 918A, 918B, 918C, 918D entraîne un mouvement de montée, un mouvement de descente ou un arrêt du vérin 33 associé à ce commutateur (MANUAL MODE) ;
un appui sur le bouton-poussoir 919 entraîne une opération de stabilisation automatique, chaque vérin 33 prenant alors une position déterminée par le dispositif gyroscopique 719 du circuit 711 (AUTO MODE) ;
un appui sur le bouton-poussoir 920 entraîne un repli simultané, en position rétractée, des quatre vérins 33 ;
un appui sur le bouton-poussoir 912 entraîne une opération de calibration de l'assiette du véhicule (LEVEL PRESET) ; et
un appui sur le bouton-poussoir 913 entraîne l'arrêt de tous les mouvements en cours (STOP).

À tout moment, il est possible de revenir au mode d'attente par un appui sur le bouton-poussoir 913.

Divers modes de réalisation et variantes ont été décrits. L'homme de l'art comprendra que certaines caractéristiques de ces divers modes de réalisation et variantes pourraient être combinées, et d'autres variantes apparaîtront à l'homme de l'art. En particulier, ce qui est exposé plus particulièrement en relation avec un exemple d'application à un dispositif stabilisateur d'une autocaravane s'applique plus généralement à tout dispositif stabilisateur de véhicule, d'habitation mobile, de camion-restaurant, de construction modulaire, etc.

## Revendications

1. Dispositif (2) stabilisateur de véhicule, comportant une unité électrohydraulique (3) comprenant :
un vérin simple effet (33) ;
au moins un ressort (37) de rappel vers une position rétractée du vérin (33) ;
une semelle (35) adaptée à établir un contact entre une extrémité du vérin (33) et une surface d'appui (5), **caractérisé en ce que** cette semelle comporte:
une structure creuse (351) à nervures radiales, composée d'un mélange de matériaux polymères et de fibres de verre ; et
un palet amortisseur (353) en matériau souple, de préférence en caoutchouc.

2. Dispositif selon la revendication 1, comportant en outre au moins une pièce intercalaire (21) de fixation de l'unité électrohydraulique (3) à un élément (15) de structure d'un véhicule (1).

3. Dispositif selon la revendication 2, dans lequel la ou les pièces intercalaires (21) sont conformées en fonction du modèle de véhicule destiné à recevoir l'unité électrohydraulique (3).

4. Dispositif selon l'une quelconque des revendications 1 à 3, dans lequel le vérin (33) comporte un pied (331) de réglage préalable à une manœuvre du vérin (33), adapté à augmenter une course du vérin (33), de préférence sur une plage de 50 mm, ce pied (331) demeurant ensuite fixe pendant la manœuvre du vérin (33).

5. Dispositif selon l'une quelconque des revendications 1 à 4, dans lequel l'unité électrohydraulique (3) comprend :
un réservoir souple (315), contenant un liquide hydraulique d'actionnement du vérin (33) ; et
une motopompe électrique (313) adaptée à mettre sous pression le liquide hydraulique contenu dans le réservoir souple (315).

6. Dispositif selon l'une quelconque des revendications 1 à 5, dans lequel des parties mobiles (33), des éléments de réglage (331) et des compartiments hydrauliques (315), associés à l'unité électrohydraulique (3), sont enduits d'une substance anticorrosion.

7. Système stabilisateur de véhicule, comportant quatre dispositifs (2) selon l'une quelconque des revendications 1 à 6.

8. Système selon la revendication 7, dans lequel les unités électrohydrauliques (3) sont adaptées à effectuer une modification d'assiette d'un véhicule (1), à l'arrêt, par rapport à une surface d'appui (5).

9. Système selon la revendication 7 ou 8, dans lequel un circuit électronique (711) est adapté à piloter individuellement chaque unité électrohydraulique (3).

10. Système selon la revendication 9, dans lequel le circuit électronique (711) comporte des éléments de protection face à des perturbations électromagnétiques externes.

11. Système selon la revendication 9 ou 10, dans lequel le circuit électronique (711) comporte un dispositif gyroscopique (719) adapté à régler automatiquement l'assiette du véhicule (1) par rapport à une surface d'appui (5) présentant une pente n'excédant pas 10 %, de préférence 6 %.

12. Système selon l'une quelconque des revendications 9 à 11, comportant une interface homme-machine (9) reliée au circuit électronique (711) par l'intermédiaire d'une liaison filaire (93).

13. Système selon l'une quelconque des revendications 9 à 11, comportant une interface homme-machine (9) reliée au circuit électronique (711) par l'intermédiaire d'une liaison sans fil.

14. Système selon l'une quelconque des revendications 9 à 13, comportant une interface homme-machine (4) connectable directement :
à une seule des unités électrohydrauliques (3) par l'intermédiaire d'un connecteur (43) ; et
à une source (45) d'alimentation externe,
cette interface homme-machine (4) étant adaptée à piloter l'unité électrohydraulique (3) concernée indépendamment de l'état du circuit électronique (711).

15. Système selon l'une quelconque des revendications 9 à 14, adapté à soulever un véhicule (1) d'un poids n'excédant pas 3,5 t.

## Patentansprüche

1. Fahrzeugstabilisierungsvorrichtung (2), die eine elektrohydraulische Einheit (3) umfasst, die Folgendes aufweist:
einen einfach-wirkenden Zylinder (33);
mindestens eine Feder (37) zur Rückstellung in Richtung einer eingefahrenen Position des Zylinders (33);
eine Grundplatte (35), die geeignet ist, einen Kontakt zwischen einem Ende des Zylinders (33) und einer Auflagefläche (5) herzustellen
**dadurch gekennzeichnet, dass** die Grundplatte Folgendes aufweist:
eine Hohlstruktur (351) mit radialen Rippen, die aus einer Mischung von Polymermaterialien und Glasfasern hergestellt ist; und
einen stoßdämpfenden Puffer (353), der aus einem flexiblen Material, vorzugsweise aus Gummi, hergestellt ist.

2. Vorrichtung nach Anspruch 1, die mindestens ein Zwischenstück (21) zur Befestigung der elektrohydraulischen Einheit (3) an einem Bauteil (15) eines Fahrzeugs (1) aufweist.

3. Vorrichtung nach Anspruch 2, wobei das oder die Zwischenstücke (21) entsprechend dem zur Aufnahme der elektrohydraulischen Einheit (3) vorgesehenen Fahrzeugmodell geformt sind.

4. Vorrichtung nach einem der Ansprüche 1 bis 3, wobei der Zylinder (33) einen Verstellfuß (331) aufweist, der geeignet ist, vor einem Betrieb des Zylinders (33) einen Hub des Zylinders (33), vorzugsweise über einen Bereich von 50 mm, zu vergrößern, wobei dieser Fuß (331) dann während des Betriebs des Zylinders (33) fixiert bleibt.

5. Vorrichtung nach einem der Ansprüche 1 bis 4, wobei die elektrohydraulische Einheit (3) Folgendes aufweist:
einen flexiblen Vorratsbehälter (315), der eine Hydraulikflüssigkeit zur Betätigung des Zylinders (33) enthält; und
eine Elektromotorpumpe (313), die geeignet ist, die in dem flexiblen Reservoir (315) enthaltene Hydraulikflüssigkeit unter Druck zu setzen.

6. Vorrichtung nach einem der Ansprüche 1 bis 5, wobei bewegliche Teile (33), Verstellelemente (331) und Hydraulikräume (315), die der elektrohydraulischen Einheit (3) zugeordnet sind, mit einer antikorrosiven Substanz beschichtet sind.

7. Fahrzeugstabilisierungssystem, das vier Vorrichtungen (2) nach einem der Ansprüche 1 bis 6 aufweist.

8. System nach Anspruch 7, wobei die elektro-hydraulischen Einheiten (3) geeignet sind, eine Änderung der Lage eines stehenden Fahrzeugs (1) relativ zu einer Auflagefläche (5) durchzuführen.

9. System nach Anspruch 7 oder 8, wobei eine elektronische Schaltung (711) dazu eingerichtet ist, jede elektrohydraulische Einheit (3) einzeln anzusteuern.

10. System nach Anspruch 9, wobei die elektronische Schaltung (711) Elemente zum Schutz gegen externe elektromagnetische Störungen aufweist.

11. System nach Anspruch 9 oder 10, wobei die elektronische Schaltung (711) eine gyroskopische Vorrichtung (719) aufweist, die geeignet ist, die Lage des Fahrzeugs (1) relativ zu einer Auflagefläche (5) mit einer Neigung, die 10 %, vorzugsweise 6 %, nicht überschreitet, automatisch einzustellen.

12. System nach einem der Ansprüche 9 bis 11, das eine Mensch-Maschine-Schnittstelle (9) aufweist, die über eine Drahtverbindung (93) mit der elektronischen Schaltung (711) gekoppelt ist.

13. System nach einem der Ansprüche 9 bis 11, das eine Mensch-Maschine-Schnittstelle (9) aufweist, die über eine drahtlose Verbindung mit der elektronischen Schaltung (711) gekoppelt ist.

14. System nach einem der Ansprüche 9 bis 13, die eine Mensch-Maschine-Schnittstelle (4) aufweist, die direkt verbindbar ist:
mit einer einzelnen der elektrohydraulischen Einheiten (3) über einen Verbinder (43); und
mit einer externen Leistungsversorgung (45),
wobei diese Mensch-Maschine-Schnittstelle (4) geeignet ist, die betreffende elektrohydraulische Einheit (3) unabhängig vom Zustand der elektronischen Schaltung (711) zu steuern.

15. System nach einem der Ansprüche 9 bis 14, das geeignet ist zum Anheben eines Fahrzeugs (1) mit einem Gewicht, das 3,5 t nicht übersteigt.

## Claims

1. Vehicle stabilizer device (2), comprising an electro-hydraulic unit (3) comprising:
a single-acting cylinder (33);
at least one spring (37) for returning towards a retracted position of the cylinder (33);
a base (35) adapted to establishing a contact between an end of the cylinder (33) and a bearing surface (5),
**characterized in that** this base comprises:
a hollow structure (351) with radial ribs, made of a mixture of polymer materials and of glass fibers; and
a shock-absorbing buffer (353) made of a flexible material, preferably of rubber.

2. Device according to claim 1, further comprising at least one spacer (21) for fastening the electro-hydraulic unit (3) to a structural member (15) of a vehicle (1).

3. Device according to claim 2, wherein the spacer(s) (21) are shaped according to the vehicle model intended to receive the electro-hydraulic unit (3).

4. Device according to any of claims 1 to 3, wherein the cylinder (33) comprises a foot (331) of adjustment prior to an operation of the cylinder (33), adapted to increasing a stroke of the cylinder (33), preferably over a 50-mm range, this foot (331) then remaining fixed during the operation of the cylinder (33).

5. Device according to any of claims 1 to 4, wherein the electro-hydraulic unit (3) comprises:
a flexible reservoir (315), containing a hydraulic liquid for actuating the cylinder (33); and
an electric motor pump (313) adapted to pressurizing the hydraulic liquid contained in the flexible reservoir (315) .

6. Device according to any of claims 1 to 5, wherein mobile portions (33), adjustment elements (331), and hydraulic compartments (315), associated with the electro-hydraulic unit (3), are coated with an anticorrosive substance.

7. Vehicle stabilizer system, comprising four devices (2) according to any of claims 1 to 6.

8. System according to claim 7, wherein the electro-hydraulic units (3) are adapted to performing a modification of the attitude of a stationary vehicle (1) relative to a bearing surface (5).

9. System according to claim 7 or 8, wherein an electronic circuit (711) is adapted to individually driving each electro-hydraulic unit (3).

10. System according to claim 9, wherein the electronic circuit (711) comprises elements of protection against external electromagnetic disturbances.

11. System according to claim 9 or 10, wherein the electronic circuit (711) comprises a gyroscopic device (719) adapted to automatically adjusting the attitude of the vehicle (1) relative to a bearing surface (5) having a slope which does not exceed 10%, preferably 6%.

12. System according to any of claims 9 to 11, comprising a man-machine interface (9) coupled to the electronic circuit (711) via a wire link (93).

13. System according to any of claims 9 to 11, comprising a man-machine interface (9) coupled to the electronic circuit (711) via a wireless link.

14. System according to any of claims 9 to 13, comprising a man-machine interface (4) directly connectable:
to a single one of the electro-hydraulic units (3) via a connector (43); and
to an external power source (45),
this man-machine interface (4) being adapted to driving the concerned electro-hydraulic unit (3) independently from the state of the electronic circuit (711) .

15. System according to any of claims 9 to 14, adapted to raising a vehicle (1) having a weight which does not exceed 3.5 t.
